Europäisches Patentamt

European Patent Office

Office européen des brevets

(11) Veröffentlichungsnummer: **0 241 882**

**A1**

# (12) EUROPÄISCHE PATENTANMELDUNG

(21) Anmeldenummer: 87105365.8

(22) Anmeldetag: 11.04.87

(51) Int. Cl.⁴: **B01J 4/00** , D06B 23/20

Die Bezeichnung der Erfindung wurde geändert (Richtlinien für die Prüfung im EPA, A-III, 7.3).

(30) Priorität: 16.04.86 CH 1520/86
19.06.86 AT 1677/86

(43) Veröffentlichungstag der Anmeldung:
21.10.87 Patentblatt 87/43

(84) Benannte Vertragsstaaten:
AT BE CH DE ES FR GB GR IT LI LU NL

(71) Anmelder: **Schoeller Textil Hard Gesellschaft m.b.H.**
**Spinnereistrasse 10**
**A-6971 Hard(AT)**

(72) Erfinder: **Haertl, Wolfdietrich**
**Sägewerkstrasse 30**
**A-6971 Hard(AT)**
Erfinder: **Frankhauser, Beda**
**Gassackerstrasse 29**
**CH-4402 Frenkendorf(DE)**
Erfinder: **Strahm, Ulrich, Dr.**
**Allmendstrasse 12**
**CH-4123 Allschwil(CH)**

(74) Vertreter: **Hefel, Herbert, Dipl.-Ing.**
**Egelseestrasse 65a**
**A-6800 Feldkirch-Tosters(AT)**

(54) **Verfahren und Einrichtungen zur Zudosierung von gelösten Stoffen zu Behandlungsbädern.**

(57) Das Verfahren dient zur Zudosierung gelöster Stoffe zu Behandlungsbädern, beispielsweise zu Veredelungsbädern in der Textilindustrie. Dem Bad werden während des Verfahrensablaufes in gleichen Zeiteinheiten etwa volumengleiche Lösungsmengen mit unterschiedlicher Stoffkonzentration beigefügt. Zur Ausübung des Verfahrens dienen zwei Behälter (4) und (5), die über ein Heberrohr (12) kommunizierend miteinander verbunden sind. Der eine Behälter (4) weist eine bodennahe Ausflußöffnung (9) auf, die über ein Ventil (11) absperrbar ist. In diesem Behälter (4) ist auch eine Mischeinrichtung (15, 17) vorgesehen. Soll progressiv dosiert werden, so wird in den Behälter (4) beispielsweise Wasser eingefüllt, in den zweiten Behälter (5) eine konzentrierte Lösung. Nach Öffnen des Ventils (11) fließen pro Zeiteinheit über das Ausflußrohr (10) gleiche Flüssigkeitsmengen ab, deren Konzentration jedoch zunimmt. Soll degressiv dosiert werden, so wird die konzentrierte Lösung in den Behälter (4), das Wasser jedoch in den Behälter (5) eingebracht. Bei linearer Dosierung werden in beide Behälter (4) und (5) Lösungen gleicher Konzentration eingefüllt. Das Ausmaß der degressiven bzw. progressiven Dosierung kann durch die Wahl der Konzentration der eingebrachten Flüssigkeit beeinflußt werden (Fig. 8).

Fig. 8

EP 0 241 882 A1

## Verfahren zur Zudosierung von gelösten Stoffen zu Behandlungsbädern und Einrichtungen zur Durchführung des Verfahrens

Die Erfindung bezieht sich auf ein Verfahren zur Zudosierung von gelösten Stoffen zu Behandlungsbädern, beispielsweise zu Wasch-und/oder Veredelungsbäder in der Textilindustrie sowie auf Einrichtungen zur Durchführung dieses Verfahrens.

In der Verfahrenstechnik, beispielsweise in der Textilindustrie, vorzugsweise in der Textilfärberei mit Reaktivfarbstoffen oder Säurefarbstoffen müssen während des Verfahrensablaufes den Behandlungsbädern gelöst Stoffe zugesetzt werden, um Zustandsgrößen des Behandlungsbades zeitabhängig zu verändern. Die gelösten Stoffe sind dann je nach Verfahren und Behandlungsbad pro Zeiteinheit mengenmäßig gesehen linear, progressiv oder degressiv zuzusetzen.

Um das hier anstehende Problem näher zu erläutern, sei beispielsweise auf das Färben von Cellulosefasern mit Reaktivfarbstoffen Bezug genommen, ohne dadurch die Erfindung darauf zu beschränken. Um bei diesem Färben qualitativ einwandfreie Ware zu erhalten, muß beispielsweise die Farbstoff-Faser-Reaktion innerhalb der vorgegebenen Färbezeit die Endfixierung erreicht haben. Damit dies tatsächlich geschehen kann, muß im Färbebad und Färbeaggregat zur gleichen Zeit an allen Stellen der gleiche pH-Wert herrschen und die gleiche Veränderung erfahren. Der pH-Wert muß ferner eine solche Fixiergeschwindigkeit auslösen, daß auch während der Reaktion eine ausreichende Migrationsfähigkeit verbleibt, so daß der fixierte Farbstoff gleichmäßig aus der Flotte ersetzt werden kann. Die Reaktionsgeschwindigkeit Farbstoff-Faser hängt zunächst ab von der Konzentration an reaktionsfähigem Farbstoff auf der Faser, vom pH-Wert und von der Temperatur. Durch das Salz ist die Konzentration an reaktionsfähigem Farbstoff auf der Faser zu Beginn der Reaktion hoch. Daher ist bei gleichem pH-Wert die Reaktionsgeschwindigkeit am Anfang höher als am Ende der Reaktion. Die hohe Anfangsgeschwindigkeit beim Alkalistart zeigt sich bei der konventionellen Färbeweise im steilen Anstieg der Fixierkurve bei Sodazugabe. Die Alkalidosierung erfolgt nun in der Weise, daß der pH-Wert im gesamten Aggregat bzw. im Behandlungsbad gleichmäßig und nach einer optimierten Kurve ansteigt, so daß die Fixierausbeute unter den gegebenen Temperaturbedingungen einen anlagebedingten Prozentsatz pro Minute nicht überschreitet. Die gewünschte lineare pH-Kurve entspricht dabei einer progressiven Alkalidosierung.

Um diese Bedingungen, zu erfüllen, wurden bereits prozessgesteuerte Dosierpumpen entwickelt, um dem Farbbad eine Lösung vorgegebener, konstanter Konzentration pro Zeiteinheit (beispielsweise Natronlauge) in unterschiedlichen Mengen zuzuführen, wobei die Steuerung so ausgelegt ist, daß diese Lösungsmengen pro Zeiteinheit je nach Bedarf und Anwendungsfall progressiv, degressiv oder linear dosiert, als zugeführt werden. Die Lösungsmengen weisen dabei eine konstante Konzentration auf. Diese Einrichtungen arbeiten zwar durchaus zufriedenstellend, sie sind aber außerordentlich aufwendig und daher teuer.

Bei verschiedenen chemischen Prozessen oder chemischen Behandlungen ist es von großer Bedeutung, daß die Zugabe von Substanzen in ihrem zeitlichen Verlauf auf den Prozeß bzw. auf die Behandlung abgestimmt und vorschriftsgemäß variiert wird. Die Variation der Zugabe kann progressiv, degressive oder gleich Null sein.

Beispielsweise wird beim Färben von Fasermaterial dem Färbebad Alkali beigegeben, um die Färbemittel an die Fasern zu fixieren. Wäre das benötigte Alkali von Anfang an im Färbebad enthalten, würde man bei heute gebräulichen Reaktivfarbstoffen mit großer Wahrscheinlichkeit nur eine sehr ungleichmäßige Färbung erzielen. Bei vielen Verfahren ist es daher heute üblich, das Alkali portionenweise zuzugeben. Oft wird empfohlen, bei der ersten Portion mit einem schwach alkalischen Mittel (z.B. Soda) zu beginnen und erst von einer der nachfolgenden Portionen an ein stark alkalisches Mittel (z.B. NaOH) zu verwenden. Bei Farbstoffen, die neutral wenig bis maessig auf die Faser aufziehen, unter der Wirkung von Fixieralkali jedoch sehr stark nachziehen, ist eine vorsichtige Steigerung der Alkalikonzentration aeusserst vorteilhaft fuer Gleichmaessigkeit und Reproduzierbarkeit der Faerbung. Die weitere Alkalizugabe kann dann rascher erfolgen, was aus faerberischer Sicht moeglich und aus wirtschaftlichen Gruenden, naemlich zur Erzielung einer moeglichst kurzen Faerbezeit, erwuenscht ist. Deshalb hat die Zugabe von Alkali in einer allerersten Phase langsam und dann immer staerker ansteigend, also progressiv zu erfolgen.

Ein Geraet fuer eine progressive Zugabe von Alkali ist in der EP 0 126 042/A2 beschrieben. Dieses ist an einer Faerbemaschine fuer Textilwaren angeschlossen und besteht im wesentlichen aus einer gesteuerten Pumpe, welche der Faerbemaschine Lauge zufuehrt. Die Steuerung der Pumpe erfolgt ueber eine Steuereinheit, welche einen Mikroprozessor enthaelt.

Nachteilig an solchen Geraeten sind die hohen Kosten, welche insbesondere wenn eine Vielzahl von Farbbaedern betrieben werden, stark zu Buche schlagen. Die Steuereinheit ist sehr kompliziert und bedarf einer aufwendigen Wartung, so dass langfristig gesehen auch die Wartungskosten nicht zu vernachlaessigen sind. Ferner ist zu bedenken, dass mit der Kompliziertheit einer Einrichtung auch deren Stoeranfaellig Analoge Ueberlegungen treffen auch auf bisher bekannte Geraete fuer eine degressive Zugabe von Substanzen zu.

Der Erfindung liegt daher die Aufgabe zugrunde, ein Verfahren vorzuschlagen, mit welchem derselbe Zweck erreichbar ist, wobei jedoch zur Durchführung des Verfahrens relativ einfache mechanische Mittel eingesetzt werden können. Gekennzeichnet ist das erfindungsgemäße Verfahren nun dadurch, daß dem Bad während des Verfahrensablaufes in gleichen Zeiteinheiten etwa volumengleiche Lösungsmengen mit unterschiedlichen Stoffkonzentrationen beigefügt werden. Dieses Verfahren kann mit sehr einfachen Einrichtungen durchgeführt werden, wobei eine erste Einrichtung dieser Art gekennzeichnet ist durch mindestens zwei im wesentlichen gleich hohe Behälter, welche über ein Überlauf-und Heberohr miteinander verbunden sind und einer der Behälter mindestens eine durch ein Ventil absperrbare, bodennahe Auslauföffnung besitzt und in diesen Behälter eine Mischeinrichtung vorgesehen ist. Dasselbe Verfahren läßt sich auch durchführen mit einer weiteren Einrichtung, die gekennzeichnet ist durch mindestens zwei Behälter und der eine Behälter mindestens eine durch ein Ventil absperrbare bodennahe Auslauföffnung besitzt und indiesem Behälter eine Mischeinrichtung vorgesehen ist und der zweite Behälter oberhalb der ersten Behälters angeordnet ist mit einer bodennahen, mittels eines Ventils absperrbaren Ausflußöffnung mit einem in den ersten Behälter ragenden Ausflußrohr und der oben liegende Behälter luftdicht verschießbar ist.

Nachstehend wird die Erfindung anhand von Figuren beispielsweise naeher erlaeutert. Es zeigen:

Fig. 1a/b/c/d eine schematische Darstellung der Grundelemente einer erfinderischen Vorrichtung in unterschiedlicher Anordnung

Fig. 2a/b zwei Ausführungsbeispiele

Fig. 3a/b/c Konzentrationsverläufe in Funktion der Zeit bei verschiedenen Behältervolumen

Fig. 4a/b Verlauf der Anteile an Dosiersubstanz in Funktion der Zeit für verschiedene Behältervolumina

Fig. 5 einen progressiven Verlauf der Anteile an Dosiersubstanz in Funktion der Zeit für Vorrichtungen mit 1 (Kurve a), 2 (Kurve b) oder 3 (Kuve c) Behältern

Fig. 6/b einen degressiven Verlauf der Anteile an Dosiersubstanz in Funktion der Zeit

Fig. 7 ein weiteres Diagramm

Fig. 8 schematisch eine weitere Einrichtung zur Ausübung des Verfahrens

Fig. 9 eine andere Einrichtung zur Ausübung des Verfahrens.

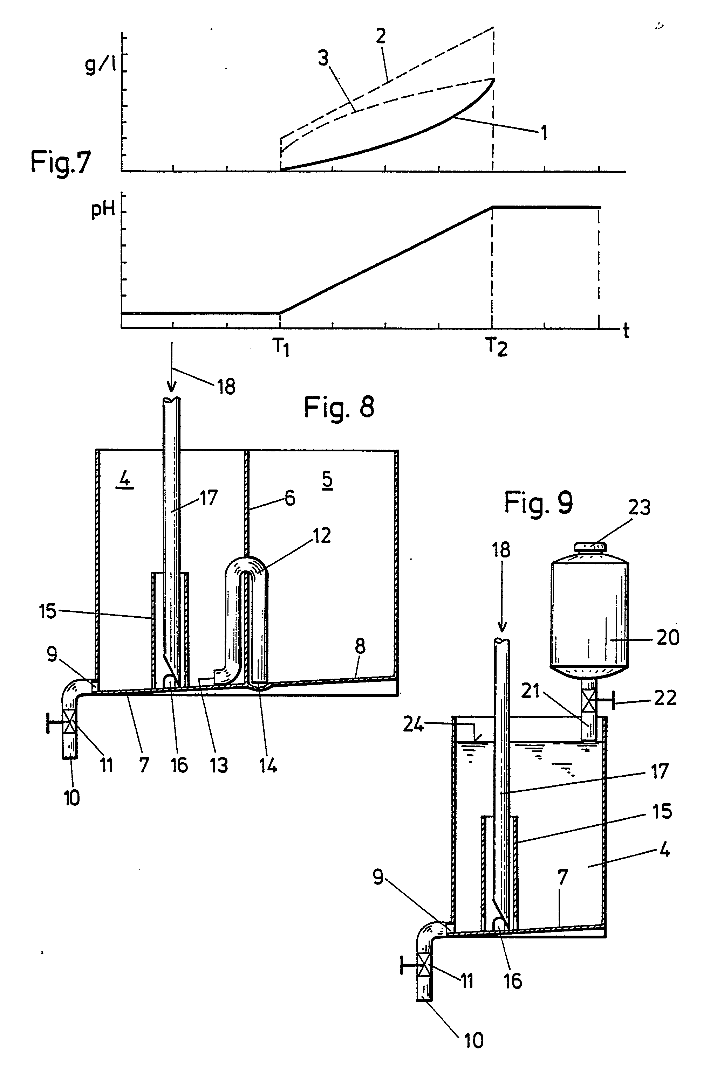

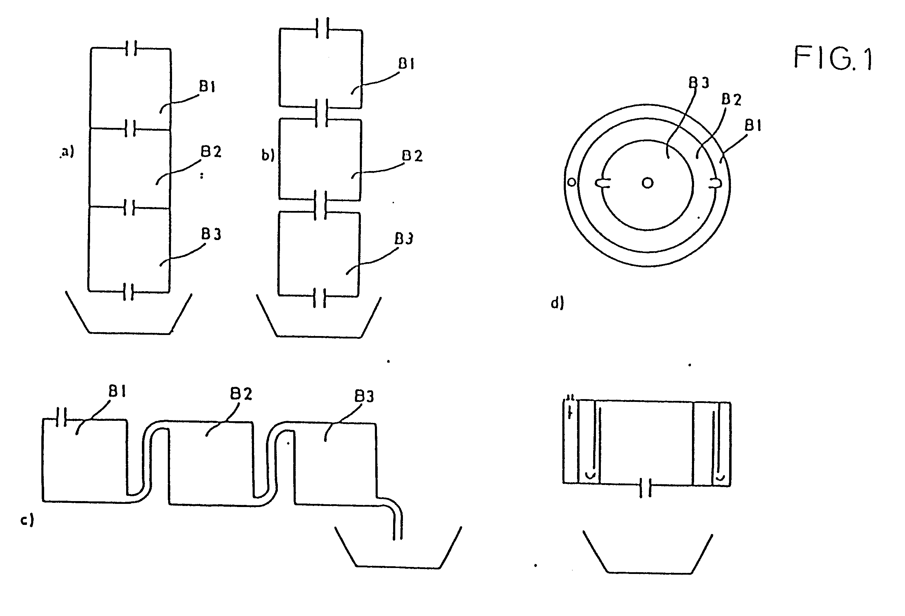

In Figur 1a bis 1d sind in schematischer Weise verschiedene Anordnungsmoeglichkeiten von Grundelementen einer erfinderischen Vorrichtung gezeigt. Vereinfacht gesagt besteht eine erfindungsgemaesse Vorrichtung aus Behaeltern B1...B3, die in einer Kette miteinander verbunden sind. Der Anschaulichkeit halber ist in den Figuren 1a...1d ein Reaktionsgefaess fuer das Medium dargestellt, in das die zu dosierende Substanz gegeben werden soll. Die Behaelter B1...B3 koennen uebereinander (Fig.1a.1b), nebeneinander (1c), ineinander (Fig.1d) oder sonstwie angeordnet sein. Auch spielt es keine Rolle, ob die Behaelter B1...B3 direkt ueber in Zwischenwaenden enthaltene Oeffnungen (Fig.1a). ueber Rohre (Fig.1b.1c) oder auf andere Weise miteinander verbunden sind. Erfindungsgemaess sind wenigstens zwei Behaelter erforderlich, wie spaeter noch erlaeutert wird.

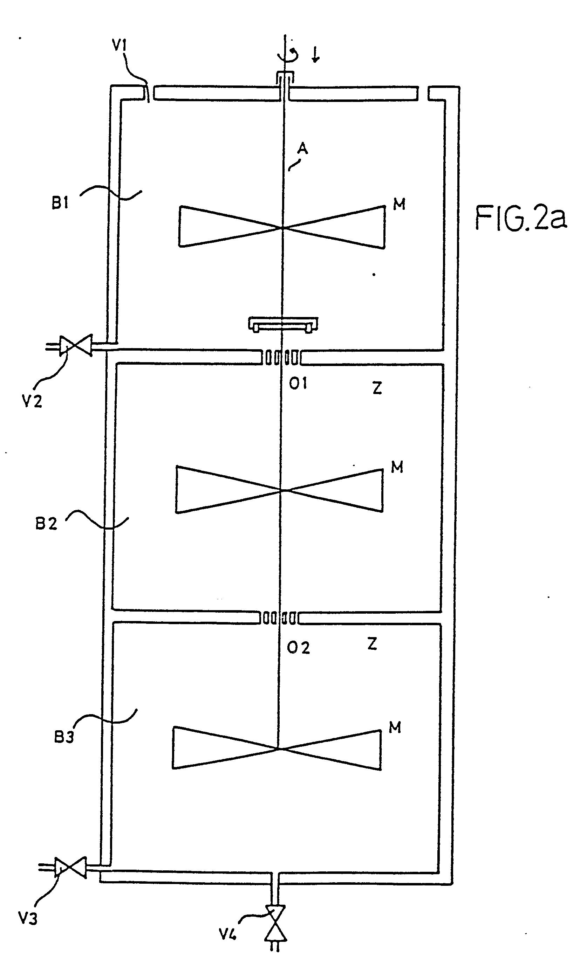

In Figur 2a ist eine der Figur 1a entsprechende Anordnung der Behaelter B1...B3 etwas detaillierter dargestellt. Ein Behaelter B1 ist ueber eine Oeffnung O1 mit einem Behaelter B2, und dieser ueber eine Oeffnung O2 mit einem Behaelter B3 verbunden. Der Behaelter B1 weist oben Einlassoeffnungen V1 und in der Naehe des Behaelterbodens ein Einlassventil V2 auf. Beim bzw. im Boden des Behaelters B3 befindet sich ein Einlassventil V3 und ein Auslassventil V4. Letzteres fuehrt zu einem in dieser Figur nicht eingezeichneten Reaktionsgefaess. In jedem der Behaelter B1...B3 befindet sich ein an einer gemeinsamen Achse a befestigtes Ruehrelement M, welches fuer eine gute Durchmischung des Behaelterinhalts sorgt. Die Achse dieser Ruehrelemente M ist nicht nur drehbar sondern auch laengsverschieblich gelagert. Mit einer Laengsverschiebung der Achse A kann naemlich ein an dieser befestigter Verschlussdeckel D fluessigkeitsdicht ueber die zwischen den Behaeltern B1 und B2 vorgesehene Oeffnung O1 gestuelpt werden. Ein solcher Verschlussdeckel ist zwar nicht in jedem Fall erforderlich, aber nuetzlich falls Dosiersubstanz vor Gebrauch laengere Zeit in der Vorrichtung verbleibt.

Die Arbeitsweise einer erfindungsgemaessen Vorrichtung soll am Beispiel einer Alkali-Dosierung in ein Faerbebad beschrieben werden. Wie in der Einleitung erlaeutert worden ist, sollte der Dosierverlauf fuer Alkali progressiv, d.h. anfangs langsam, dann stetig steigend, gewaehlt werden, um eine gleichmaessige Faerbung zu erzielen.

In einem ersten Schritt werden die Ventile V2 und V3 geoeffnet. Das Ventil V4 ist geschlossen. Es wird Verduennungsfluessigkeit, beispielsweise Wasser, durch das Ventil V3 eingelassen, bis aus dem Ventil V2 ein Ueberlauf oder mittels einem nicht dargestellten Fuellstandsmesser eine vollstaendige Fuellung des Behaelters B2 festgestellt wird. Dann wird das Ventil V3 - beispielsweise von Hand oder elektromagnetisch - geschlossen.

In einem zweiten Schritt wird die zu dosierende Substanz -in unserem Beispiel waessriges Alkali - durch die Oeffnung V1 in den Behaelter B1 eingefuellt. Im Bedarfsfalle kann die Dosiersubstanz mit einer Verduennungsfluessigkeit verduennt werden.

Nachdem die Dosiersubstanz eingefuellt ist, kann mit dem Dosiervorgang begonnen werden. Hierzu laesst man den Inhalt der Behaelter B1...B3 ueber das Ventil V4 ausstroemen. Damit dies ueberhaupt moeglich ist, muss das Ventil V1 oder eine sonstige Oeffnung als Lufteinlass offen bleiben. Vielfach ist zur besseren Durchmischung des Mediums, dem die Dosiersubstanz beigegeben werden soll, eine Umwaelzpumpe vorgese hen. In diesem Fall wird die aus dem Ventil V4 stroemende Dosiersubstanz vorzugsweise direkt in die Umwaelzpumpe geleitet, so dass sie gut und schnell im Medium verteilt wird.

Falls jedoch nach dem Einfuellvorgang nicht sofort mit dem Dosieren begonnen wird, besteht die Gefahr dass sich die im Behaelter B1 befindliche Dosiersubstanz ueber die Oeffnung O1 mit dem im nachfolgenden Behaelter B2 Verduennungsmittel vorzeitig vermischt. Dies ist unerwuenscht, wie sich aus den nachfolgenden Betrachtungen ergeben wird. Fuer solche Faelle ist der Verschlussdeckel D vorgesehen, mittels welchem sich die Oeffnung O1 verschliessen laesst.

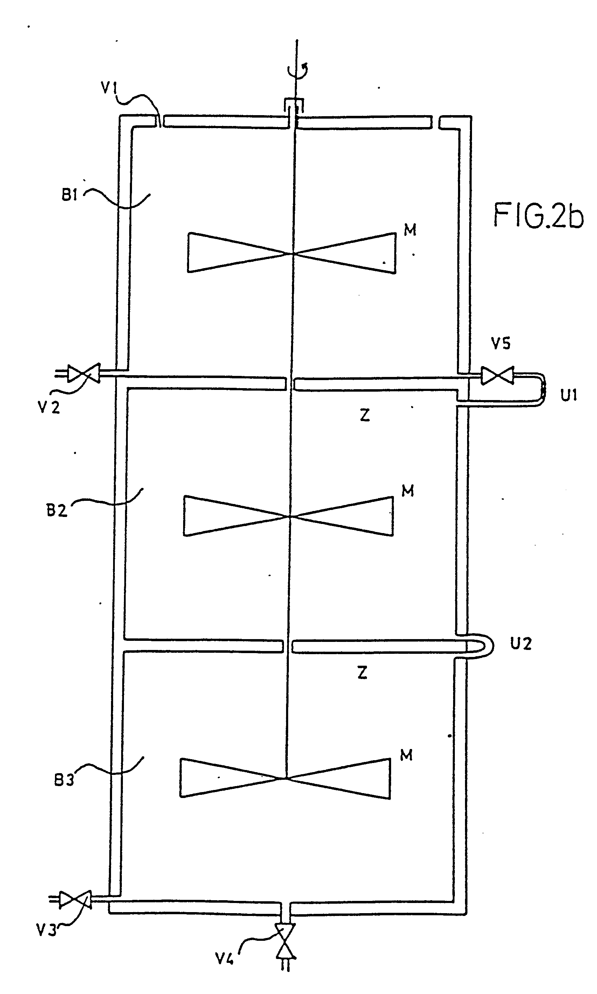

Eine Alternativloesung ist in Fig. 2b dargestellt. Die Drehachse A fuer die Ruehrelemente M ist in den Behaelterzwischenwaenden auf fluessigkeitsdichten Lagern gelagert. Die Fluessigkeitsfoerderung zwischen den Behaeltern B1...B3 erfolgt ueber Ueberleitungen U1 und U2, wobei die Ueberleitung U1 zwischen den Behaeltern B1 und B2 ueber ein Ventil V5 kontrollierbar ist.

Haeufig ist es erforderlich, den Inhalt der Behaelter B1...B3 aktiv zu foerdern. Hierzu kommt irgend eine in den Figuren nicht dargestellte, handelsuebliche Pumpe mit vorzugsweise linearer Foerdercharakteristik in Frage. Gegebe nenfalls kann der Motor fuer die Foederpumpe zugleich noch fuer den Antrieb des Ruehrwerkes eingesetzt werden.

Laesst man nun Fluessigkeit aus dem Behaelter B3 ausfliessen, so fliesst im ersten Moment nur gerade Verduennungsmittel. Die Fluessigkeit jedoch, die aus dem Behaelter B3 fliesst, wird ersetzt durch Fluessigkeit aus dem Behaelter B2, und in diesem durch Fluessigkeit aus dem Behaelter B1. Hierbei fliesst also Alkali in den Behaelter B2 und mischt sich mit dem dort enthaltenen Verduennungsmittel. Sehr rasch enthaelt also auch der Behaelter B2 ebenfalls Alkali, wenn auch in sehr verduennter Form. Dieses verduennte Alkali gelangt nun in den Behaelter B3 und vermischt sich dort mit dem Wasser, so dass in kuerzester Zeit auch in Behaelter B3 Spuren von Alkali finden lassen. In dieser Konzentration fliesst es alsdann aus dem Behaelter B3.

Durch das Ventil V4 fliesst somit eine Fluessigkeit, die im Laufe der Zeit eine zunehmend hoehere Konzentration $C(t)$ an zu dosierender Substanz aufweist.

In den Figuren sind Vorrichtungsbeispiele mit drei der Dosierung dienenden Behaeltern gezeigt. Der Behaelter B1 enthaelt die zu dosierende Substanz und die Behaelter B2 und B3 werden als Mischbehaelter eingesetzt. Sie werden mit dem Verduennungsmittel gefuellt. Als Minimalkonfiguration kaeme eine Einrichtung mit nur zwei der Dosierung dienenden Behaeltern in Frage, indem man anstelle von zwei Mischbehaeltern B2 und B3 nur einen Mischbehaelter verwendet. Der Einfachheit halber soll eine solche Minimalkonfiguration als Ausgangspunkt fuer die Berechnung des Konzentrationsverlaufes $C_2(t)$ dienen, d.h. der Konzentration der Dosiersubstanz im letzten Mischbehaelter und damit zugleich der Konzentration der Dosiersubstanz, die zum Zeitpunkt t den letzten Behaelter verlaesst. Dieser kann wie folgt berechnet werden:

$$C_2(t) = C1 \left[ 1 - \exp\left( \frac{-kt}{V_{20}} \right) \right] \quad \text{fuer } kt < V_{10}$$

$$C_2(t) = C1 \left[ 1 - \exp\left( \frac{-V_{10}}{V_{20}} \right) \right] \quad \text{fuer } kt > V_{10}$$

Hierbei bedeuten:

$C_1$ Konzentration der Dosiersubstanz in Behaelter B1

$C_2(t)$ Verlauf der Konzentration an Dosiersubstanz, welche aus dem Ventil V4 ausfliesst

$V_{10}$ Anfangsvolumen Behaelter B1

$V_{20}$ Anfangsvolumen Behaelter B2

k Ausflussgeschwindigkeit in Volumen pro Zeiteinheit

t verstrichene Dosierzeit

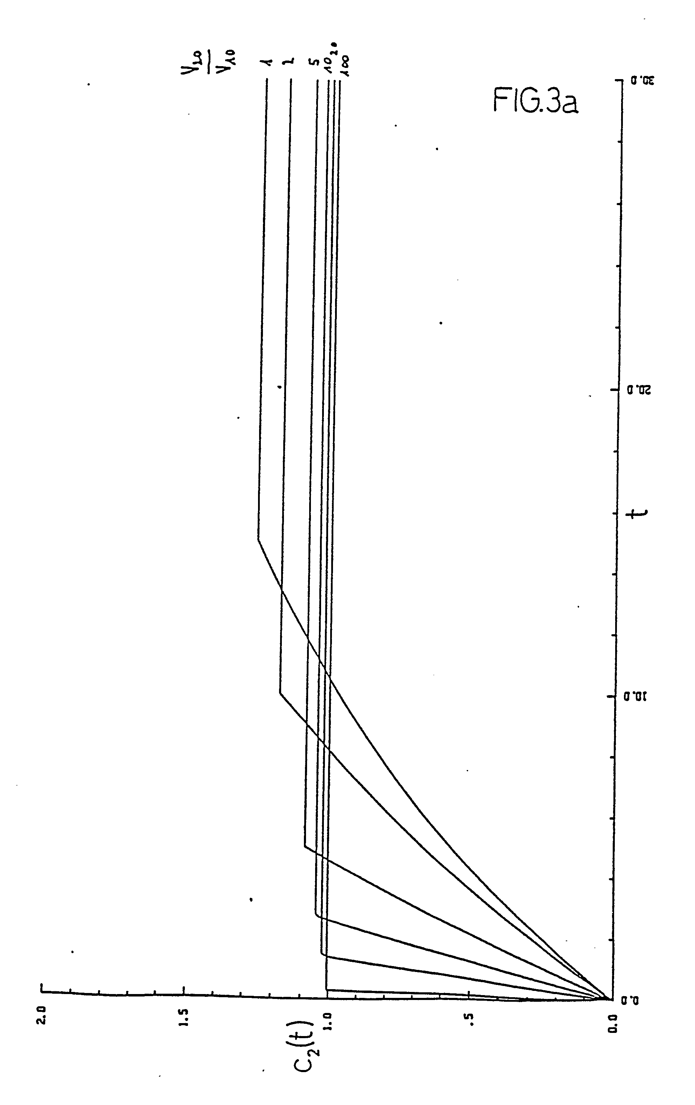

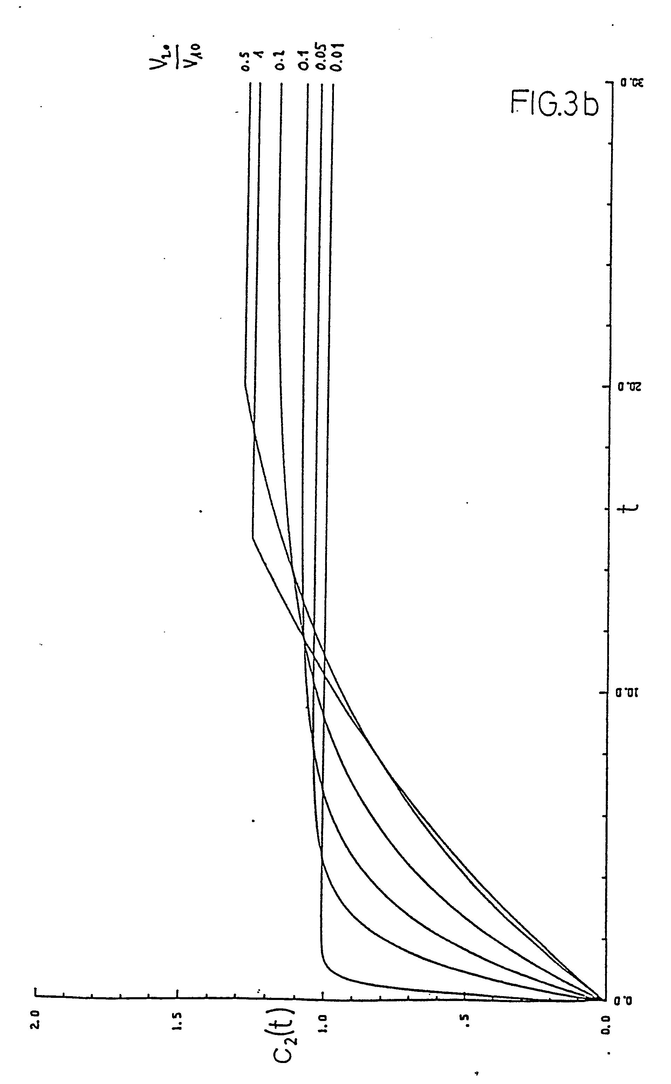

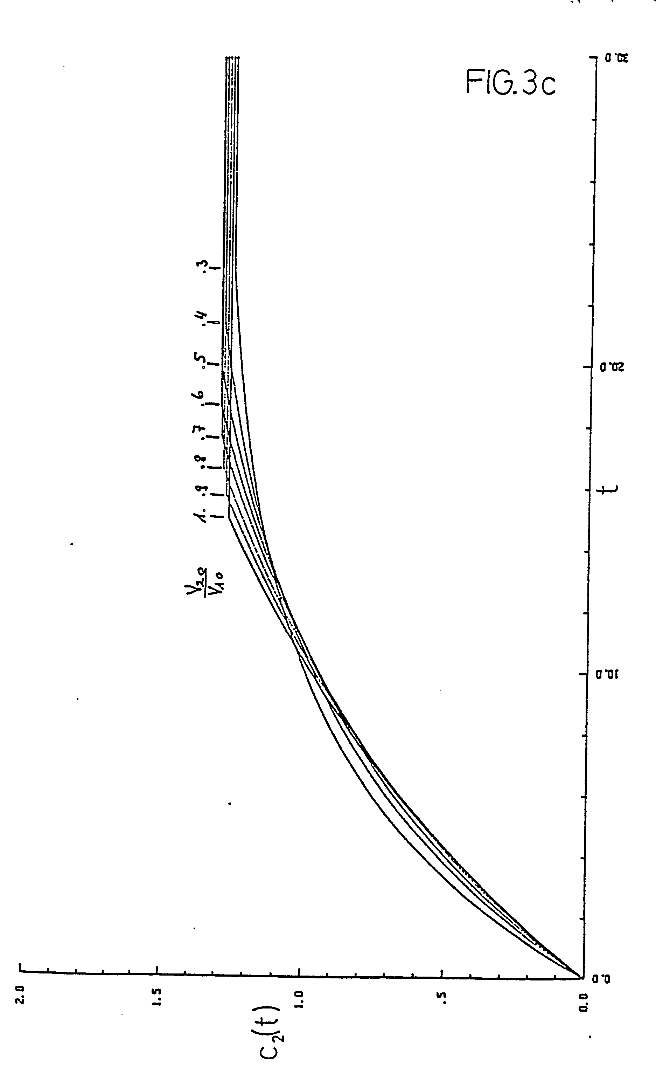

In den Figuren 3a,3b und 3c ist der Konzentrationsverlauf $c_2(t)$ in Funktion verschiedener Behaeltervolumina gezeigt, wobei das Gesamtvolumen der Behaelter B1...B3 jedoch konstant bleibt. Es gilt fuer

Fig. 3a: $V_{20}/V_{10} \geq 1$

Fig. 3b: $V_{20}/V_{10} \leq 1$

Fig. 3c: $0.3 < V_{20}/V_{10} \leq 1$

Der Konzentrationsverlauf $c_2(t)$ zeigt die pro Zeiteinheit dem Reaktionsbehaelter zugefuehrte Alkalikonzentration und haengt von der eingesetzten Alkalimenge (in Fig. 3 nicht variiert) sowie vom Volumenverhaeltnis der Behaelter B1 und B2 ab. Hierbei ist zu beachten, dass - sobald der Behaelter B1 einmal leer ist - die Konzentration im Behaelter B2 konstant bleibt demzufolge ab diesem Zeitpunkt das Alkali linear dosiert wird. Falls das Behaeltervolumen $V_{10}$ sehr klein gewaehlt wird, erfolgt demzufolge sehr rasch ein linearer Dosierverlauf. Soll nun die Zugabe von Alkali in der ersten Phase moeglichst langsam, dann aber progressiv immer staerker steigend erfolgen, so sind die Behaeltervolumina $V_{20}/V_{10}$ zwischen 1:2 bis 1:1 zu waehlen.

Der Massen-oder Molanteil m%(t) an zur Zeit t zugegebener Aktivsubstanz ergibt sich zu:

$$m\%(t) = 100 \left[ \frac{kt}{V_{10}} - \frac{V_{20}}{V_{10}} \left(1-e^{-kt/V_{20}}\right) \right]$$

wobei $kt < V_{10}$

$$m\%(t) = 100 \left[ 1 - \left(\frac{V_{10}+V_{20}-kt}{V_{10}}\right) \left(1-e^{-V_{10}/V_{20}}\right) \right]$$

wobei $kt > V_{10}$

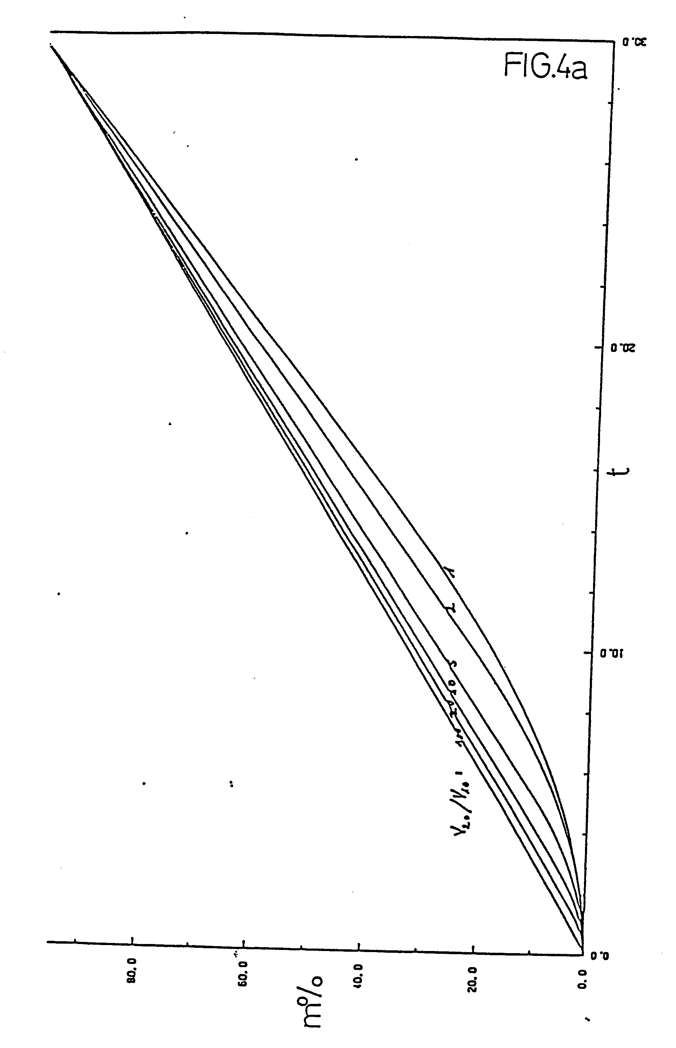

Der Verlauf von m%(t) ist in Figur 4a und 4b fuer verschiedene Volumenverhaeltnisse $V_{20}/V_{10}$ dargestellt. Hierbei gilt fuer

Fig. 4a: $V_{20}/V_{10} \geq 1$ und

Fig. 4b: $V_{20} V/_{10} \leq 1$.

Eine besonders hohe Progression wird erreicht, wenn die Anfangsvolumina $V_{20} : V_{10}$ zwischen 1:2 und 1:1 liegen.

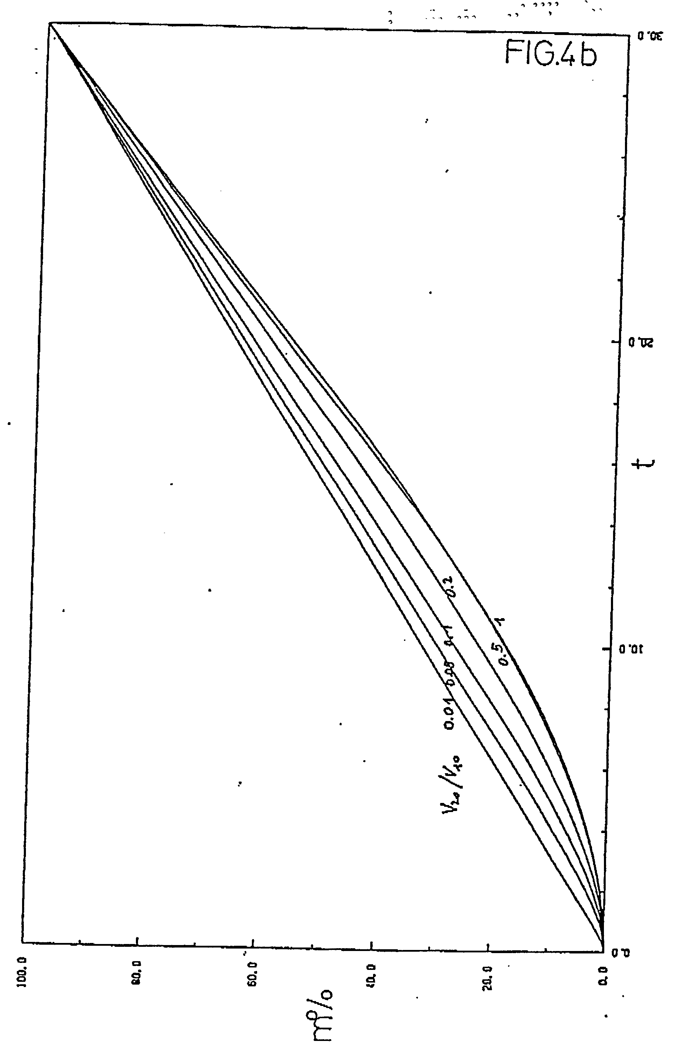

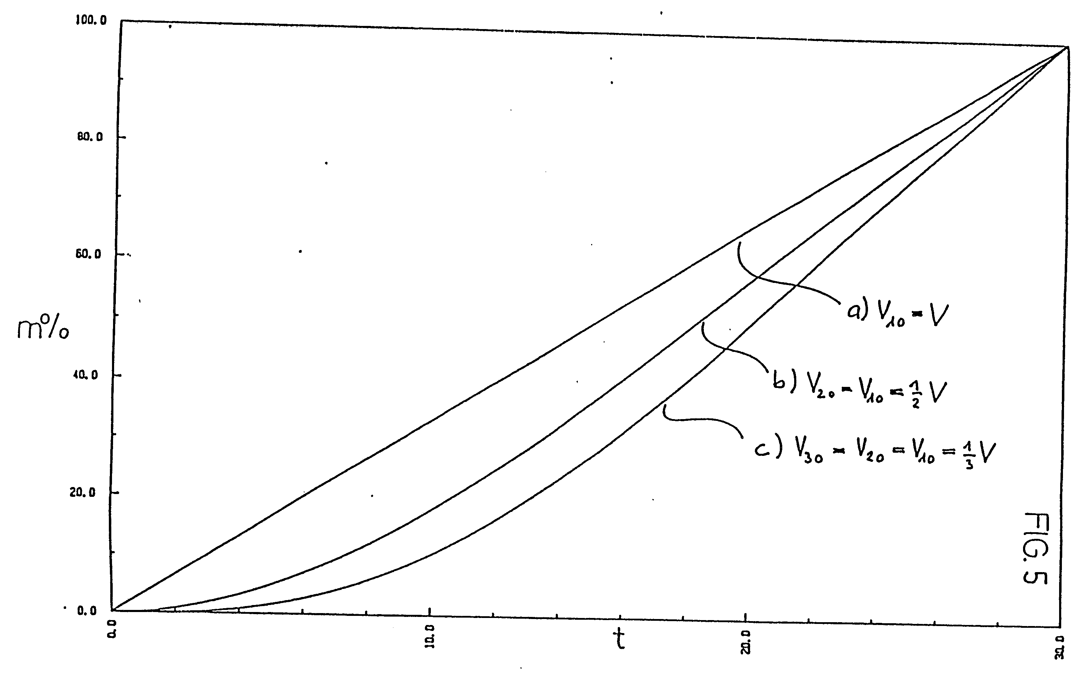

Ferner ist aus Figur 5 ersichtlich, dass die Progression umso staerker wird, je mehr Mischbehaelter eingesetzt werden ( Anzahl Mischbehaelter a=0,b=1,c=2 ).

Vorraussetzung fuer die Gueltigkeit der obigen Berechnungen ist allerdings, dass der Fluessigkeitsaustritt linear erfolgt, Doch ist bei einer kostenguenstigen Ausfuerungsform mit einer einfachen Foerdereinrichtung diese Forderung ohne weiteres erfuellt.

Beim Betrachten der obigen Kurvenverlaeufe faellt auf, dass die Konzentration in enorm weitem Rahmen variiert werden kann. Dies wirkt sich insbesondere bei Faeberbaedern sehr vorteilhaft aus. Bei den herkoemmlichen Dosierverfahren wird ja bekanntlich die Konzentration der zugegebenen Dosiersubstanz nie veraendert. Falls die Dosiersubstanz in besonders geringen Mengen zugegeben werden soll wird sie nur tropfenweise also diskontinuierlich zugegeben. Doch kann bei hochwirksamen Mitteln (z.B. Fixieralkali) selbst ein Tropfen schon zuviel sein, wenn er in hochkonzentrierter Form in das Faerbebad eintritt. Aus diesem Grunde werden die zu dosierenden Substanzen bei Faerbebaedern in der Regel in verduennter Form bereitgestellt und bis zum Schluss in dieser Verduennung zugegeben. Ein Vergleich hinsichtlich Verbrauch an Verduennungsmittel zeigt, dass bei den herkoemmlichen Dosierverfahren fuer eine Faerbung bedeutend mehr Verduennungsmittel bereitgestellt werden muss. Als Beweis fuer diese Behauptung sei auf das am Schluss dieser Beschreibung aufgefuehrte Anwendungsbeipiel 1 verwiesen. Eine Ueberschlagsrechnung wuerde naemlich zeigen, dass bei einer Dosierung nach herkoemmlichen Methoden etwa doppelt so viel Verduennungsmittel benoetigt wuerde. Das erfindungsgemaesse Dosierverfahren hat also nicht nur den Vorteil, dass die Dosierfluessigkeit waehrend der ganzen Dosierdauer kontinuierlich zugegeben werden kann, sondern dass fuer die Dosierung pro Faerbebad bedeutend weniger Verduennmungsmittel bereitgestellt werden muss.

Die erfingungsgemaesse Vorrichtung kann nicht nur fuer eine progressive Dosierung sondern auch fuer eine degressive Dosierung eingesetzt werden werden. Der oder die Behaelter mit dem Verduennungsmedium werden hierbei einfach vor den oder die Behaelter mit der Dosiersubstanz geschaltet.

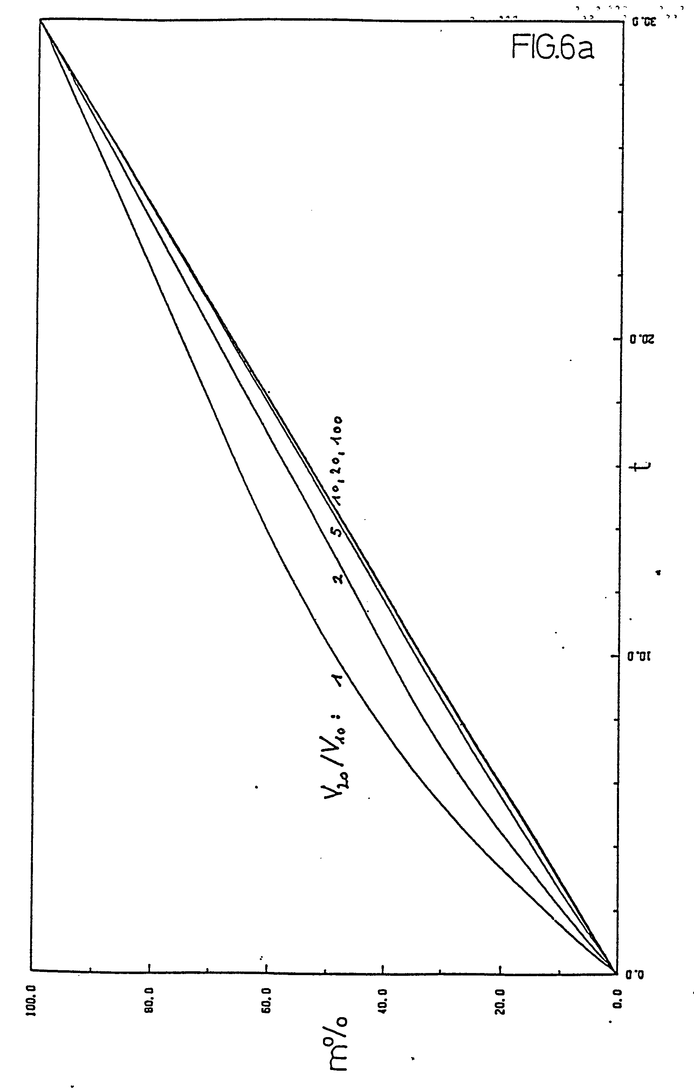

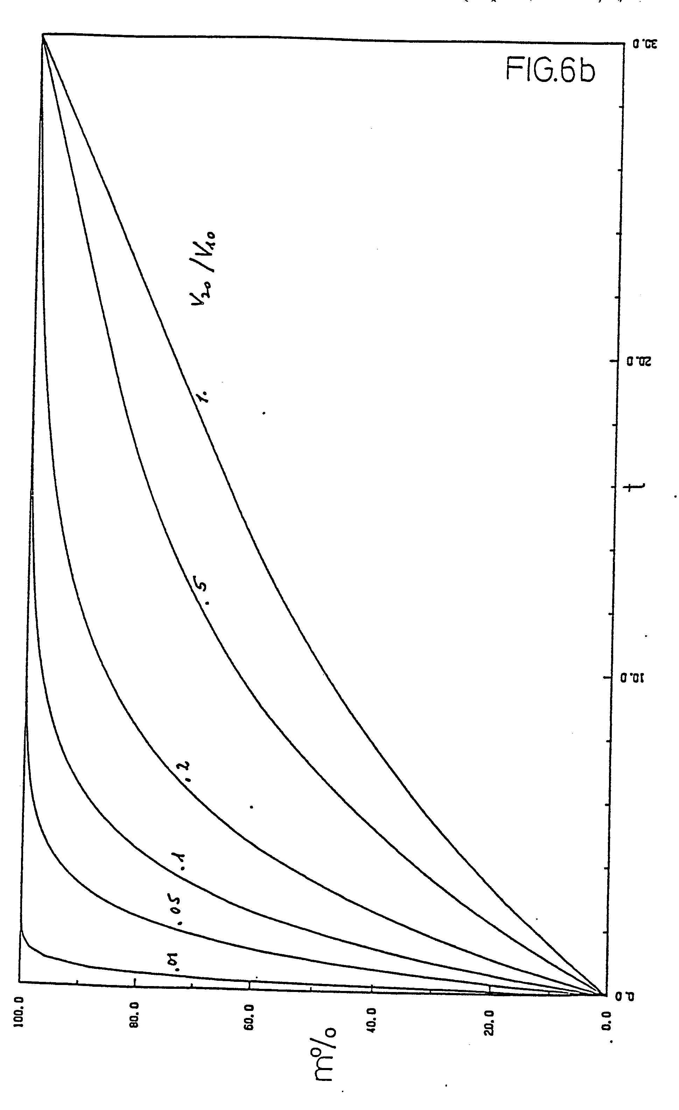

In den Figuren 6a und 6b ist der Verlauf der Massen-oder Molanteile in Funktion der Zeit bei degressivem Dosierverlauf dargestellt. Hierbei gilt fuer:

Fig. 6a: $V_{20}/V_{10} \leq 1$
Fig 6b: $V_{20}/V_{10} \geq 1$

Der Vollstaendigkeit halber sei noch darauf hingewiesen, dass die Vorrichtung selbstverstaendlich auch fuer eine lineare Dosierung eingesetzt werden kann. In diesem Falle enthalten alle Dosier-und Mischbehaelter eine Fluessigkeit mit gleicher chemischer Zusammensetzung.

Der Aufbau einer erfindungsgemaessen Dosiervorrichtung ist also denkbar einfach. Behaelter, Ruehrer, Ventile koennen aus rostfreiem Stahl oder je nach konkreter Anforderung aus anderen Materialien hergestellt sein. Die Wahl der Materialien ist fuer den Fachmann kein Problem. Der oder die Ruehrer sorgen in den Behaeltern fuer eine gute Durchmischung. Variationmoeglichkeiten betehen in Anordnung von Ventilen und Hahnen, welche unterschiedliche Beladungen der Behaelter ermoeglichen.

Die erfindungsgemaesse Vorrichtung eignet sich fuer die Dosierung von u.a.
-alkalische Verbindungen, insbsondere Alkalimetall-oder Erdalkalimetallhydroxiden oder Alkalimetallsalzen, z.B. Natrium-oder Kaliumhydroxid oder Calciumhydroxid, Natrium-oder Kaliumcarbonat bzw. Natrium-oder Kaliumhydrogencarbonat oder Natrium-oder Kaliumphosphat, ferner Ammoniumhydroxid oder organischen $C_1$-$C_4$-Alkyl-oder Alkanolaminen (z.B. Diaethyl-oder Diaethanolamin); oder Mischungen solcher Verbindungen;
-Saeuren, insbesondere anorganische Mineralsaeuren wie z.B. Salz-, Schwefel-oder Phosphorsaeure, ferner organische Saeuren, wie z.B. niedermolekulare Mono-, Di-oder Tricarbonsaeuren (Ameisensaeure, Essigsaeure, Oxalsaeure, Zitronensaeure etc.); oder Saeuregemische;
-Salze, z.B. neutrale saure oder alkalisch wirkende Salze, wie Natriumchlorid, Natriumsulfat, Alkalimetallhydrogenphosphate, Natriumacetat, Ammoniumsulfat sowie auch Gemische solcher Salze;
-Farbstoffe oder Farbstoffmischungen, die fuer die verschiedensten Substrate geeignet sind, z.B. Textilfarbstoffe, die als Direkt, Saeure-, Reaktiv-, Dispersions-oder basische Farbstoffe gekennzeichnet sind (fuer Einzelheiten wird auf Colour Index, herausgegeben von der Society of Dyers and Colourists verwiesen);
-Hilfsmitteln, z.B. solchen wie sie in Faerbe-oder Ausruest-oder sonstigen Behandlungsbaedern fuer Textilien, Papier, Leder, Kuststoffe, Metalle etc. benoetigt werden. Genannt seien z.B. oberflaechenaktive Hilfsmittel, ferner Schutz-und Veredelungsmittel.

Die genannten zu dosierenden chemischen Verbindungen werden in der Regel als waessrige oder Wasser enthaltende fluessige Zubereitungen dosiert. Es ist auch moeglich, verschiedene der genannten Verbindungen nacheinander oder miteinander (z.B. Salze und alkalische Verbindungen) zu dosieren.

Anwendungsmoeglichkeiten insbesondere fuer Faerbeprozesse sind beispielsweise von J. Carbonell, J.H. Heetjans und M. Angehrn in der Veroeffentlichung "Ein Modell zur Analyse und Steuerung von Faerbeprozessen" ( 13. IFVTCC-Kongress vom 20./21. September 1984 in London) dargestellt worden.

Eine weitere Anwendungsmöglichkeit betrifft z.B. die Steuerung von Kristallisationsprozessen bei der Herstellung von (reinen) (kristallisierten) chemischen Verbindungen.

Im Unterschied zu den bisher bekannten Dosiervorrichtungen wird hier bei einem Dosiervorgang die Dosiersubstanz nicht in gleichbleibender Konzentration, sondern vermischt mit einem variierenden Anteil an Verduennungssubstanz abgegeben. Wenn im Medium - wie dies insbsondere bei Faerbebaedern zutrifft - - schon groessere Mengen der als Verduennungsmittel verwendeten Fluessigkeit vorhanden sind, spielt dies in den meisten Faellen keine Rolle. Dies ist beispielsweise beim Faerben von natuerlichen oder synthetischen stickstoffhaltigen Fasermaterialien (Wolle,Polyamid) und von cellulosischen Fasermaterialien oder solche enthaltenden Fasermischungen mit Reaktivfarbstoffen der Fall. Hier wird die waesserige Alkalimetallhydroxidloesung in das waesserige Faerbebad dosiert. Das beim Dosiervorgang zusaetzlich zugegebene Verduennungsmittel ist vernachlaessigbar. Ein grosser Vorteil der Erfindung besteht darin, dass die Dosierfluessigkeit linear ausfliessen kann, so dass sich eine aufwendige Pumpensteuerung eruebrigt. Ein weiterer grosser Vorteil der Efindung ist darin zu sehen, dass aufgrund der Konzentrationsvariation in der zugegebenen Dosierfluessigkeit insgesmt weniger Verduennungsmittel als bei herkoemmlicher Dosierung benoetigt wird.

7

## Anwendungsbeispiel 1

Faerbeaggregat: Haspelkufe
Faerbegut: 200kg reines Baumwollgarn
Faerbebad: 3 000 lt
Salz: 50g/lt festes Natriumchlorid
Farbstoff: 8kg (4% des Fasergewichtes) Handelsfarbst. (C.I. Reactiv Black 5)
Alkali: 2.5 ml/lt Natriumhydroxid 36° Bé
Faerbetemperatur: 40 °C

## Dosiervorrichtung mit 3 Behealtern

Behaelter 1: 7.5 lt Natriumhydroxid 36°Bé; Behaelter mit Wasser aufgefuellt (auf 30 lt)
Behaelter 2 und 3: je 30 lt Wasser
Auslaufzeit: 60 Minuten
(bzw. Pumpenleistung: 1.5 lt/Min).

Das Textilmaterial wird bei Raumtemperatur eingefahren. Anschliessend wird das Faerbebad auf 40 °C gestellt. Waehrend der Aufheizvorganges wird der vorgeloeste Farbstoff und anschliessend das Salz in fester Form zugegeben. Ferner werden die Behaelter B2 und B3 mit Wasser gefuellt. Schliesslich wird noch der Behaelter B1 mit Natriumhydroxid 36 ° Bé und Wasser versehen. Nach ca. 10 Minuten wird (sofern vorhanden) die Pumpe der Dosiervorrichtung in Gang gesetzt und der gesamte Inhalt der Dosierbehaelter gleichmaessig in das Faerbebad gelassen. Waehrend weiterer 15 Minuten wird ohne weitere Zugaben bei 40 °C gefaerbt. Zum Schluss werden die ueblichen Massnahmen zur Entfernung von hydroxylisiertem/nicht fixierten Farbstoff getroffen.

Man erhaelt eine schwarze Faerbung von hervorragender Gleichmaessigkeit.

## Anwendungsbeispiel 2

Faerbeapparatur: Zirkulationsapparat
Faerbegut: 700g Polyamid-6-flocke
Flottenverhaeltnis: 1 : 15
Salz: 1g/lt Natriumazetat
Egalisiermittel: 1% des Fasergewichtes an nichtionogenem Hilfsmittel
Farbstoff: 1.5% des Fasergewichtes eines Handelsfarbstoffes (C.I. Acid Orange 162) sowie
1.3% des Fasergewichtes eines Handelsfarbstoffes (C.I. Acid Brown 298)

## Dosiervorrichtung mit 3 Behaeltern

Behaelter 1: 21g Essigsaeure 80%, Behaelter mit Wasser aufgefuellt (auf 50 ml)
Behaelter 2 und 3: je 50 ml Wasser
Auslaufzeit: 50 Minuten
(bzw. Pumpenleistung: 3ml/min)

Im Zikulationsfaerbeapparat werden 700g Polyamid-6-Flocke in 11 Liter Wasser eingesetzt. Anschliessend werden 1g/lt Natriumazetat und 7g des Hilfsmittels zugegeben. Die Behaelter B2 und B3 werden mit Wasser und der Behaelter B1 mit Essigsaeure und Wasser gefuellt. 10 Minuten nach Zugabe des Hilfsmittels wird Farbstoff zugegeben. Bei periodisch wechselnder Richtungsaenderung der Flottenzirkulation erhitzt man die Faerbeflotte von 25 °C innerhalb von 50 Minuten auf 98 - 100 °C (d.h. 1,5 °C/min). Waehrend dieser Aufheizphase erfolgt die Zugabe von Essigsaeure ueber die Dosiervorrichtung und dadurch eine kontinuierliche Absenkung des FaerbepH-Wertes. Man faerbt waehrend 20 Minuten bei 98 - 100 °C. Anschliessend wird das Faerbebad bis auf 80 C abgekuehlt und die Polyamid-6-Flocke gespuelt und getrocknet. Man erhaelt eine egale braune Faerbung der Polyamid-6-Flocke. Der pH-Wert des Faerbebades betraegt zu Anfang 7 und gegen Ende 4,5.

Unter Bezug auf die Fig. 7, 8 und 9, die ein weiteres Diagramm veranschaulichen und weitere Einrichtungen zur Ausübung des Verfahrens, wird die gegenständliche Erfindung weiter erläutert.

Das Diagramm nach Fig. 7 veranschaulicht den Verlauf einer linearen, idealen pH-Kurve beim Färben von Cellulosefasern mit Reaktivfarbstoffen. Während des Zeitabschnittes $T_1$ -$T_2$, es handelt sich hier um einen ersten Abschnitt der Fixierzeit, muß, um qualitativ einwandfreie Ware zu erhalten, u. a. der pH-Wert der Farbflotte linear ansteigen. Da der pH-Wert den negativen dekadischen Loarhythmus der Wasserstoffionenkonzentration entspricht, ist erkennbar, daß die Alkalidosierung pro Zeiteinheit, um den linearen Verlauf der pH-Kurve zu erreichen, progressiv verlaufen muß. Dies veranschaulicht die obere während der Zeit $T_1$ - $T_2$ eingezeichnete Kurvenlinie 1, die die pro Zeiteinheit zugesetzte volumsbezogene Menge der Natronlaufe angibt. Mit zunehmender Fixierzeit wird die zugesetzt volumsbezogene Menge (Grmm pro Liter = g/l) größer.

Es sind auch andere Verfahrensabläufe im Zusammenhang mit Behandlungsbädern bekannt, bei welchen die Kurvenlinie 1 lineare verläuft oder aber auch degressiv. Solche Kurvenlinien veranschaulichen die strichlierten Linien 1 bzw. 3 im Diagramm nach Fig. 7.

Nach dem erfindungsgemäßen Verfahren werden nun dem Behandlungsbad während gleicher Zeiteinheiten gleiche Volumsmengen der Lösung, die jedoch unterschiedliche Konzentrationen aufweisen, zugesetzt. Eine erste Einrichtung dazu zeigt im Querschnitt Fig.8 :

Zwei Behälter 4 und 5, die einander hinsichtlich den Abmessungsverhältnissen (Verhältnis zwischen Querschnittsfläche und Höhe) und des Fassungsvolumens im wesentlichen entsprechen, besitzen eine gemeinsame Trennwand 6 und geneigte Böden 7 und 8, letztere liegen in einer gemein samen Ebene. Der erste Behälter 4 besitzt eine bodennahe Ausflußöffnung 9 mit einem nach unten gerichteten Abflußrohr 10 und einem Absperrventil 11. Die beiden Behälter 4 und 5 sind ferner über ein Überlauf-oder Heberrohr miteinander kommunizierend verbunden, wobei die Mündungsöffnungen 13 und 14 dieses Heberrohres 12 ebenfalls in Bodennähe liegen. Dieses Heber-oder Überlaufrohr 12 erstreckt sich etwa bis zur halben Füllhöhe der Behälter 4, 5.

Im Mittelbereich des ersterwähnten Behälters 4 ist ein vertikal stehendes Rohr 15 angeordnet, das am Boden 7 des Behälters befestigt ist und das im bodennahen Bereich mehrere Öffnungen oder Durchbrechungen 16 aufweist. Die Höhe dieses Rohres 15 entpsricht in etwa der Höhe der Überlaufrohres 12.

In dieses Rohr 15 ragt eine Luftzuführleitung 17, über welche beim betriebsmäßigen Einsatz der Einrichtung Luft eingeblasen wird (Pfeil 18). Die Mündungsöffnung dieses Rohres 15 liegt nahe dem Boden 7 des Behälters. Hier ist dieses Luftzuführungsrohr schräg abgeschnitten. Die im Behälter 4 liegende Mündungsöffnung 13 des Überlauf-oder Heberrohres 12 ist gegen die benachbarte Öffnung 16 des vertikalen Rohres 15 gerichtet. Der Querschnitt dieses Rohres 15 beträgt einen Bruchteil des Querschnittes des Behälters 4. Die Luftzuführleitung 17 und das Rohr 15 bilden eine Mischeinrichtung, auf die im folgenden noch eingegangen wird.

Es wird nun zuerst der Fall betrachtet, daß in ein hier nicht dargestelltes Behandlungsbad, in welche das Auslaufrohr 10 mündet, gelöste Stoffe in progressiver Weise zudosiert werden sollen (siehe Kurvenlinie 1 in Fig. 7), wobei der Einfachheit halber nachstehend als Lösungsmittel Wasser angegeben wird, wobei natürlich auch Lösungsmittel anderer Art in Frage kommen können.

Der Behälter 4 wird mit Wasser gefüllt, der Behälter 5 mit einer konzentrierten Lösung. Das Ventil 11 ist vorerst geschlossen, Wasser und Lösung werden in die Behälter 4 und 5 gleichzeitig eingefüllt, um vorerst das Überlaufen der Flüssigkeiten von einem Behälter in den anderen über das Heberrohr 12 zu vermeiden. Werden, wie erwähnt, die Flüssigkeiten gleichzeitig eingebracht, so liegt die Grenzschichte dieser Flüssigkeiten innerhalb des Heberrohres 12 im Bereich der Trennwand 6.

Soll nun der gelöste Stoff dem hier nicht dargestellten Behandlungsbad zugeleitet werden (siehe Zeitabschnitt $T_1$ -$T_2$ in Fig. 7) so wird das Ventil oder der Hahn 11 geöffnet und in die Leitung 17 Luft eingeblasen. Die über das Abflußrohr 10 abfließende Flüssigkeitsmenge pro Zeiteinheit ist im wesentlichen konstant, nach den Regeln der Mechanik unelastischer Flüssigkeit ist die Ausflußmenge, sofern die Flüssigkeit nur unter Wirkung der Schwerkraft ausfließt, eine Funktion der Wurzel aus der Höhe der Flüssigkeitssäule. Ist die Einrichtung gegenüber dem Behandlungsbad entsprechend hoch angeordnet, so kann die Schwankung der Ausflußgeschwindigkeit bzw. der Ausflußmenge in der Praxis unberücksichtigt bleiben.

Wird das Ventil 11 also geöffnet und wird angenommen, daß in der ersten hier zu betrachtenden Zeiteinheit ein Liter Flüssigkeit durch das Abflußrohr 10 abgeflossen ist, so hat sich das Füllstandsniveau in den beiden Behältern auf Grund ihrer kommunizierenden Verbindung in der gleichen Zeiteinheit um das gleiche Maß verringert, aus beiden Behältern ist während dieser betrachteten Zeit die gleiche Menge Flüssigkeit abgeflossen und zwar aus dem Behälter 4 ein Liter reines Wasser und aus dem Behälter 5 ein halber Liter konzentrierte Lösung, und zwar über das Heberrohr 12 in den Behälter 4, so daß die Hälfte der aus dem Behälter 4 abgeflossenen Menge über das Heberrohr 12 aus dem Behälter 5 ersetzt wurde, mit anderen Worten: das Flüssigkeitsvolumen im Behälter 4 besitzt 95 Teile Wasser und 5 Teile konzentrierte

9

Lösung. Nach Ablauf einer zweiten Zeiteinheit ist wiederum ein Liter durch das Abflußrohr 10 ausgelaufen, so daß nunmehr im Behälter 4 90 Teile Wasser und 10 Teile konzentrierte Lösung sich befinden. Diese Überlegungen können nun weitergeführt werden und es können die nachfolgenden Zeiteinheiten betrachtet werden, so daß sich unter den vorstehend geschilderten Voraussetzungen folgende Verhältnisse in der Folge auf die jeweiligen gleichen Zeiteinheiten bezogen ergeben: 85:15; 80:20; 75:25; 70:30 usf.

Die aus dem Ausflußrohr 10 abströmende Flüssigkeit ändert somit ihre Konzentration progressiv. Das Ausmaß der Änderung kann dabei durch die Konzentration der Lösung im Behälter 5 beeinflußt werden. Je geringer die Konzentration dieser Lösung um so geringer der zeitliche Anstieg.

Das Luftzuführrohr 17 und das zentrale Rohr 15 dienen nur zum Mischen der beiden Flüssigkeiten. Die aufsteigenden Luftblasen reißen innerhalb des Rohres 15 Flüssigkeitsteile mit und sorgen so für eine gleichmäßige Durchmischung der beiden Flüssigkeiten. Anstelle eines solchen Mischrohres kann beispielsweise auch ein mechanischer Mischer eingesetzt werden.

Sollen nun gelöste Stoffe dem Behandlungsbad in degressiver Weise zugesetzt werden. So wird die konzentrierte Lösung in den Behälter 4 und das Wasser in den Behälter 5 gegeben. Bei linearer Dosierung sind in beiden Behältern 4 und 5 Lösungen gleicher Konzentration.

Um die pro Zeiteinheit abfließende Menge der Lösung ebenfalls regeln zu können, kann das Ventil 11 als Regelventil ausgebildet sein. Es ist aber auch möglich, am Behälter 4 mehrere Abflußrohre 10 mit Ventilen eventuell mit unterschiedlichen Querschnitten vorzusehen. Im Bedarfsfall können dann diese Ventile bzw. Abflußrohre einzeln oder in Gruppen eingesetzt werden. Die einzelnen Abflußrohre können dann vor dem Behälter für das Behandlungsbad in einer gemeinsamen Sammelleitung zusammengeführt sein.

Das zweite Ausführungsbeispiel veranschaulicht die Fig. 9, wobei gleiche Teile jeweils mit gleichen Hinweisziffern wie in Fig. 7 ausgestattet sind. Der Aufbau des ersten Behälters 4 mit seiner Mischeinrichtung 15, 17 entspricht dem Ausführungsbeispiel des Behälters 4 nach Fig. 8. Der zweite Behälter 20 ist hier oberhalb des ersten Behälters 4 angeordnet, mit einem bodenseitigen Ausflußrohr 21 und mit einem Ventil 22. Mittels eines Verschlusses 23 ist dieser Behälter 20 luftdicht verschließ bar. Die Mündungsöffnung des Abflußrohres 21 ragt bis zum Flüssigkeitsspiegel 24 des ersten Behälters. Beim betriebsmäßigen Einsatz fließt die Lösung aus dem Behälter 20 in den Behälter 4, wenn die Mündungsöffnung des Ausflußrohres 21 durch den absinkenden Flüssigkeitsspiegel 24 frei gegeben wird. Im übrigen entspricht die Funktionsweise dem erstbesprochenen Ausführungsbeispiel.

Das Abflußrohr 21 des Behälters 20 bzw. der Behälter 20 mit seinem Abflußrohr 21 kann gegenüber dem Behälter 4 höhenverstellbar angeordnet sein, so daß dadurch die Flüssigkeitsmengen, die die beiden Behälter auszunehmen haben, in ihrem Verhältnis zueinander einstellbar sind.

Wurde einleitend die Erfindung anhand eines Färbebades für Cellulosefasern mit Reaktionsfarbstoffen erläutert, so sei abschließend erwähnt, daß die Erfindung auch für andere Behandlungsbäder einsetzbar ist, wenn diesen Bädern während des Verfahrensablaufes gelöste Stoffe zugesetzt oder zudosiert werden müssen.

**Ansprüche**

1. Verfahren zur Zudosierung von gelösten Stoffen zu Behandlungsbädern, beispielsweise zu Wasch- und/oder Veredelungsbädern in der Textilindustrie, dadurch gekennzeichnet, daß dem Bad während des Verfahrensablaufes in gleichen Zeiteinheiten etwa volumengleiche Lösungsmengen mit unterschiedlichen Stoffkonzentrationen beigefügt werden.

2. Verfahren nach Anspruch 1 zwecks progressiver oder degressiver Zugabe einer Dosiersubstanz zu einem ein Verdünnungsmittel enthaltenden Medium, dadurch gekennzeichnet, daß zwecks Zugabe der Dosiersubstanz, der erste oder der letzte Behälter der Behälterkette mit der Dosiersubstanz und die übrgen Behälter mit einem Verdünnungsmittel gefüllt werden, und daß das in der Weise erhaltene Flüssigkeitsgemisch mit gleichmäßiger Strömungsgeschwindigkeit aus dem letzten Behälter der Behälterkette in das Medium ausfließt, während gleichzeitig Dosiersubstanz aus dem ersten bzw. letzten Behälter der Behälterkette nachströmt.

3. Verfahren nach Anspruch 1 oder 2, dadurch gekennzeichnet, daß die Dosiersubstanz in Form einer wässrigen Lösung dieser Substanz dosiert wird und das Verdünnungsmittel in den übrigen Behältern Wasser ist.

4. Verfahren nach Anspruch 3, dadurch gekennzeichnet, daß die Dosiersubstanz ein Alkalimetallhydroxid, vorzugsweise Natrium-oder Kaliumhydroxid oder ein Alkalimetallsalz, vorzugsweise Natrium-oder Kaliumcarbonat oder Kaliumhydrogencarbonat oder -phosphat ist.

5. Verfahren nach Anspruch 3, dadurch gekennzeichnet, daß die Dosiersubstanz eine Säure, insbesondere eine Schwefel-, Salz-oder Phosphorsäure, oder eine organische Säure, wie z.B. eine niedermolekulare Mono-, Di-oder Tricarbonsäure oder ein Säuregemisch ist.

6. Einrichtung zur progressiven, degressiven oder linearen Zugabe einer in wenigstens einem Dosierbehälter enthaltenen flüssigen Substanz zu einem Medium nach einem der Ansprüche 1 bis 5, dadurch gekennzeichnet, daß der Dosierbehälter (B1 oder B3) und ein oder mehrere eine Mischsubstanz enthaltende Mischbehälter (B2, B3 bzw. B1, B2) in einer Behälterkette (B1...B3) miteinander verbunden sind, wobei der Dosierbehälter (B1 bzw. B3) das erste, bzw. das letzte Glied der Behälterkette (B1...B3) bildet und der letzte Behälter (B3) eine Auslaßeinrichtung (V3) für die Zugabe seines Inhalts zum Medium aufweist.

7. Einrichtung nach Anspruch 6, dadurch gekennzeichnet, daß die Behälter (B1...B3) kammerartig übereinander angeordnet sind, derart, daß die Behälter (B1...B3) mit Zwischenböden (Z) untereinander verbunden sind, und daß entweder die Zwischenböden (Z) zwischen den Behältern (B1...B3) über Öffnungen (0) miteinander verbunden sind, von welchen mindestens eine mittels eines Verschlußdeckels (D) flüssigkeitsdicht verschießbar ist, oder daß die Behälter (B1...B3) mittels außerhalb derselben verlaufenden Überleitungen (U) miteinander verbunden sind, wovon wenigstens eine ein Ventil (VS) aufweist.

8. Einrichtung nach Anspruch 7, dadurch gekennzeichnet, daß in den Behältern (B1...B3) Rührer (M) vorhanden sind, die an einer gemeinsamen drehbaren Achse (A) angeordnet sind, und daß -sofern vorhanden - der Verschlußdeckel (D) ebenfalls auf der Achse (A) angeordnet und die Achse (A) nicht nur drehbar sondern auch noch längsverschieblich gelagert ist.

9. Einrichtung nach Anspruch 6 oder 7, dadurch gekennzeichnet, daß die Behälter (B1...B3) nebeneinander angeordnet und über Röhren oder Schläuche miteinander verbunden sind.

10. Einrichtung zur Durchführung des Verfahrens nach Anspruch 1, gekennzeichnet durch mindestens zwei im wesentlichen gleich hohe Behälter (4, 5), welche über ein Überlauf-und Heberrohr (12) miteinander verbunden sind und einer der Behälter (4) mindestens eine durch ein Ventil (11) absperrbare, bodennahe Auslauföffnung (9) besitzt und in diesem Behälter (4) eine Mischeinrichtung (15, 17) vorgesehen ist. (Fig. 8).

11. Einrichtung zur Durchführung des Verfahrens nach Anspruch 1, gekennzeichnet durch mindestens zwei Behälter (4, 20) und der eine Behälter (4) mindestens eine durch ein Ventil (11) absperrbare bodennahe Auslauföffnung (9) besitzt und in diesem Behälter (4) eine Mischeinrichtung (15, 17) vorgesehen ist und dar zweite Behälter (20) oberhalb des ersten Behälters (6) angeordnet ist mit einer bodennahen, mittels eines Ventils (22) absperrbaren Ausflußöffnung mit einem in den ersten Behälter ragenden Ausflußrohr (21) und der oben liegende Behälter (20) luftdicht verschließbar ist (Fig. 9).

12. Einrichtung nach Anspruch 10 oder 11, dadurch gekennzeichnet, daß die Mischeinrichtung aus einem im Mittelbereich des Behälters (4) angeordneten, mit dessen Boden (7) verbundenen und im wesentlichen vertikal stehenden Rohr (15) mit bodennahen Öffnungen (16) gebildet ist und in dieses Rohr (15) eine Luftzuführleitung (17) ragt, deren Mündungsöffnung nahe dem Behälterboden (7) liegt und der Querschnitt des Rohres (15) nur ein Bruchteil des Querschnittes des dieses aufnehmenden Behälters (4) beträgt und die Höhe des Rohres kleiner ist, etwa halb so groß ist wie die Füllhöhe des Behälters (4).

13. Einrichtung nach Anspruch 10 oder 12, dadurch gekennzeichnet, daß die Mündungsöffnung (13) des Überlaufrohres (12), die im Behälter (4) mit der bodennahen Auslauföffnung (9)liegt, gegen das der Mischung dienende im wesentlichen vertikal stehende Rohr (15) gerichtet ist (Fig.8).

14. Einrichtung nach Anspruch 10 oder 13, dadurch gekennzeichnet, daß die Mündungsöffnung (13, 14) des Überlaufrohres (12) in Bodennähe der jeweiligen Behälter (4, 5) liegen (Fig. 8).

15. Einrichtung nach Anspruch 10, dadurch gekennzeichnet, daß die beiden Behälter (4, 5) eine gemeinsame Trennwand (6) aufweisen und die Böden (7, 8) beider Behälter (4, 5) in einer gemeinsamen, gegen die Horizontale geneigte Ebene liegen.

16. Einrichtung nach Anspruch 10, dadurch gekennzeichnet, daß die beiden Behälter (4, 5) sowohl hinsichtlich ihres Fassungsvermögens wie auch hinsichtlich ihrer Form (Verhältnis von Querschnittsfläche zu Höhe) im wesentlichen gleich sind.

17. Einrichtung nach Anspruch 11, dadurch gekennzeichnet, daß die Ausflußmündung desAusflußrohres (21) des oberen Behälters (20)in ihrer Höhenlage gegenüber dem Boden des unteren Behälters einstellbar ist.

18. Einrichtung nach Anspruch 11, dadurch gekennzeichnet, daß der obere Behälter (20) bezüglich seiner Höhenlage gegenüber dem Boden (7) des unteren Behälters einstellbar ist.

19. Einrichtung nach Anspruch 10 oder 11, dadurch gekennzeichnet, daß der eine Behälter (4) mehrere, mittels Ventilen absperrbare, bodennahe Ausflußöffnungen (9) besitzt und vorzugsweise diese Ausflußöffnungen unterschiedliche Querschnitte haben.

**0 241 882**

20. Anwendung des Verfahrens nach einem der Ansprüche 1 bis 5 zur Dosierung einer wässrigen Lösung eines Alkalimetallhydroxids oder -carbonates oder -phosphates in ein wässriges Färbebad während des Färbens von cellulosischen Fasermaterialien oder Mischfasermaterialien mit Reaktivfarbstoffen.

21. Anwendung des Verfahrens nach einem der Ansprüche 1 oder 5 zur Dosierung einer wässrigen Säurelösung während des Färbens von stickstoffhaltigen Fasermaterialien, insbesondere Polyamid-und Wollfasermaterialien mit anionischen Farbstoffen.

Fig.7

Fig. 8

Fig. 9

**FIG.1**

a) B1 B2 B3

b) B1 B2 B3

c) B1 B2 B3

d) B1 B2 B3

FIG.2a

FIG.2b

0 241 882

$C_2(t)$

$\dfrac{V_{20}}{V_{10}}$

1
2
5
10 20
100

2.0

1.5

1.0

.5

0.0

0.0  10.0  20.0  30.0

t

FIG.3a

FIG.3b

FIG.3c

FIG.4a

FIG.4b

0 241 882

$m\%$

a) $V_{10} = V$

b) $V_{20} = V_{10} = \frac{1}{2} V$

c) $V_{30} = V_{20} = V_{10} = \frac{1}{3} V$

FIG. 5

100.0

80.0

60.0

40.0

20.0

0.0

0.0

10.0

20.0

30.0

$t$

FIG.6a

FIG.6b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 126 042 (ADCON) * Zusammenfassung; Figur 1; Seite 4, Zeilen 3-22 * | 1,2,6 | B 01 J 4/00 D 06 B 23/20 |
| | --- | | |
| A | GB-A-2 058 596 (H.F. HOPE et al.) * Zusammenfassung; Figur 1; Seite 1, Zeilen 76-100; Seite 2, Zeilen 10-128 * | | |
| | --- | | |
| A | FR-A- 928 029 (SOC. INDUSTRIELLE DU TRAITEMENT DES LIQUIDES ET DES GAZ) * Seite 1, Zeilen 1-28; Seite 2, Zeilen 4-93; Figuren 1,2 * | | |
| | ----- | | |

RECHERCHIERTE SACHGEBIETE (Int. Cl.4)

B 01 F
B 01 J
D 06 B
G 01 N

Der vorliegende Recherchenbericht wurde für alle Patentansprüche erstellt.

| Recherchenort DEN HAAG | Abschlußdatum der Recherche 06-07-1987 | Prüfer SIEM T.D. |
|---|---|---|